# EUROPEAN PATENT SPECIFICATION

(11) **EP 2 424 749 B1**
(45) Date of publication and mention of the grant of the patent: **26.02.2014**
(21) Application number: 09738537.1
(22) Date of filing: 29.04.2009
(51) Int. Cl.: B60R 21/02, A62B 35/00, B60R 22/00

(54) **A HEAD AND NECK SUPPORT DEVICE**
KOPF- UND NACKENSTÜTZVORRICHTUNG
DISPOSITIF DE SUPPORT DE TÊTE ET DE COU

(43) Date of publication of application: 07.03.2012
(73) Proprietor: Quickvest 529 (Proprietary) Limited, 7708 Cape Town (ZA)
(72) Inventor: NELSON, Grant, Leigh, Cape Town 7708 (ZA)
(74) Representative: Viering, Jentschura & Partner Patent- und Rechtsanwälte
(86) International application number: PCT/IB2009/051742
(87) International publication number: WO 2009/133524

(56) References cited:
- WO-A1-2008/114215
- WO-A1-2008/127729
- US-A1- 2007 240 291

## Description

### FIELD OF INVENTION

This invention relates to a head and neck support device for use by a person wearing a helmet according to the preamble of claim 1.

### BACKGROUND ART

US 2007/0240291 A1 discloses a head and neck support device according to the preamble of claim 1.

This head and neck support device is not configured to conform to the anatomical shape of the shoulder and front torso of the person. This has a negative impact on the comfort of the person.

This drawback can be overcome with the features of claim 1.

### SUMMARY OF INVENTION

According to the invention, there is provided a head and neck support device for use by a person wearing a helmet according to claim 1.

The front carrier portions of the carrier structure of the head and neck support device may be hingedly mounted to the high collar thereby permitting articulation of the front carrier portions relative to the high collar.

The carrier of the head and neck support device may include a U-shaped yoke which includes said front carrier portions and an integral rear carrier portion which extends behind the high collar relative to the person.

The high collar of the head and neck support device may extend between a lower position at about the base of the person's neck and an upper position adjacent a horizontal level centre of gravity of the head of the person and helmet combined, which is disposed at about eye level of the person.

The tethering means of the head and neck support device may include a first tethering system including a pair of tethering straps attachable between the helmet at one side thereof and the carrier structure and a second tethering system including a pair of tethering straps attachable between the helmet at the other side thereof and the carrier structure.

One of the tethering straps of each tethering system of the head and neck support device may be attachable between the helmet and the collar so as to provide a restraint between the collar and the helmet in a substantially horizontal direction, while the other tethering strap may be attachable between the helmet and the collar so as to provide a restraint between the front carrier portion and the helmet in a substantially vertical direction.

The tethering straps of each tethering system of the head and neck support device may be attached to the helmet at a common attachment point.

The head and neck support device may be adapted for use by an occupant of a vehicle wearing a shoulder harness having two shoulder belts, the shoulder belts of the shoulder harness being received, in use, in a position between the shoulder straps and the front carrier portions of the head and neck support device, the front carrier portions of the carrier structure including belt locating means for locating and holding the shoulder belts relative to the carrier structure in said position between the shoulder straps and the front carrier portions.

The locating means of the head and neck support device may include a pair of first locating formations which are integral with the collar and which define channels within which a different one of the shoulder belts can be located; and a pair of second locating formations which are defined near lower ends of the front carrier portions in which a different one of the shoulder belts can be located.

The head and neck support device may be adapted for use with a shoulder harness of a type comprising two shoulder belts and a restraint which is connected between the shoulder belts causing the shoulder belts to extend towards one another from an upper region thereof towards a lower region thereof in a substantially V-shaped configuration, the second locating formations of the belt locating means each being in the form of a U-shaped locating formation in which a different one of the shoulder belts can be received and defining an open end which faces outwards away from the other one of the second locating formations.

### BRIEF DESCRIPTION OF THE DRAWINGS

Further features of the invention are described hereinabove by way of a nonlimiting example of the invention, with reference to and as illustrated in the accompanying diagrammatic drawings. In the drawings:

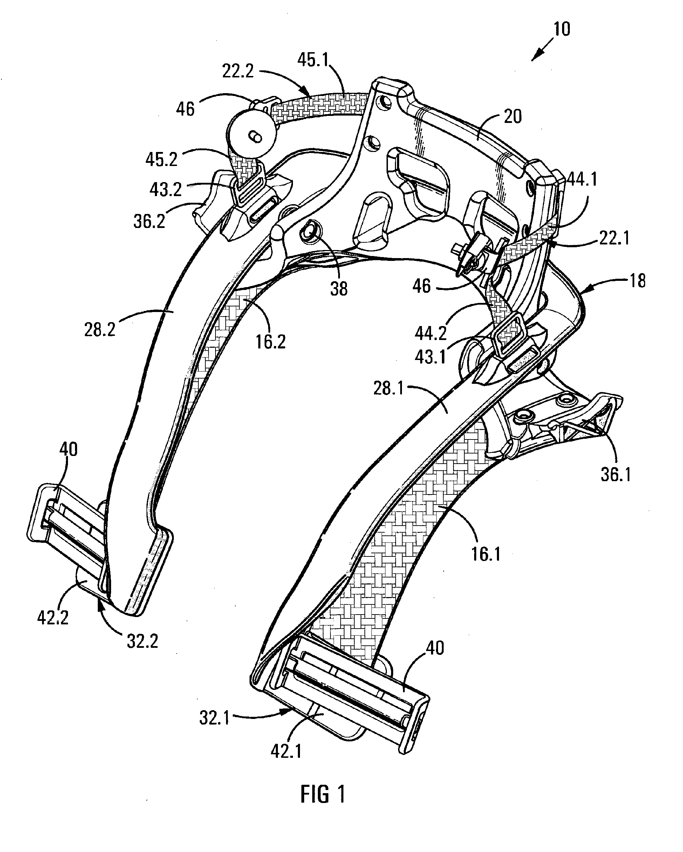

Figure 1 shows a schematic perspective view of a head and neck support device for use by a person wearing a helmet, in accordance with the invention;

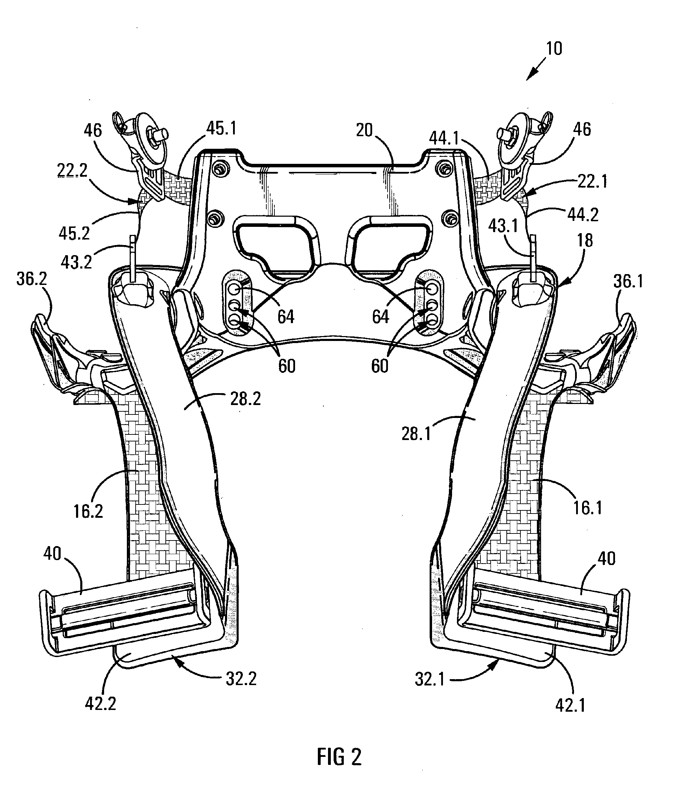

Figure 2 shows a schematic front view of the head and neck support device of Figure 1;

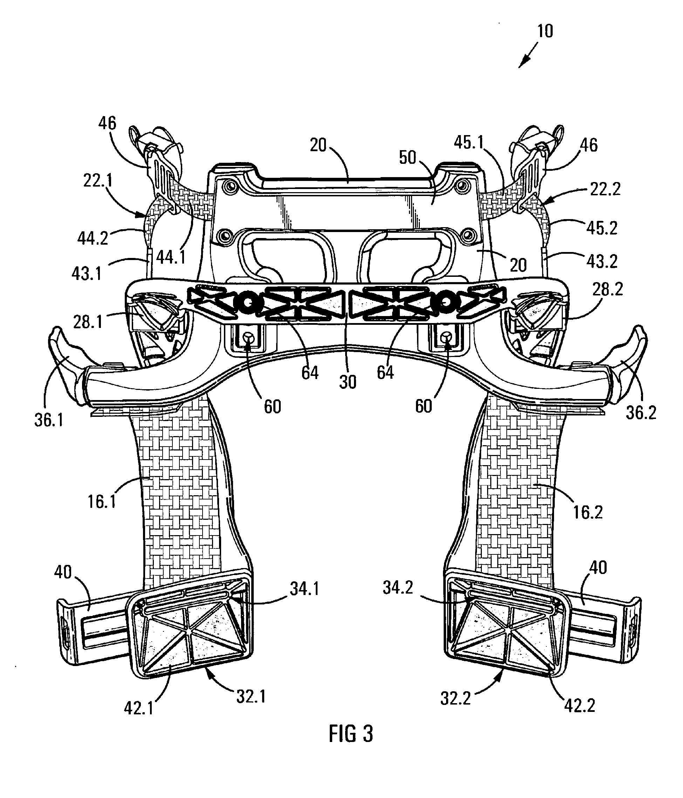

Figure 3 shows a schematic rear view of the head and neck support device of Figure 1;
Figure 4 shows a schematic side view of the head and neck support device of Figure 1, showing the manner in which the yoke is hingedly displaceable relative to the high collar;

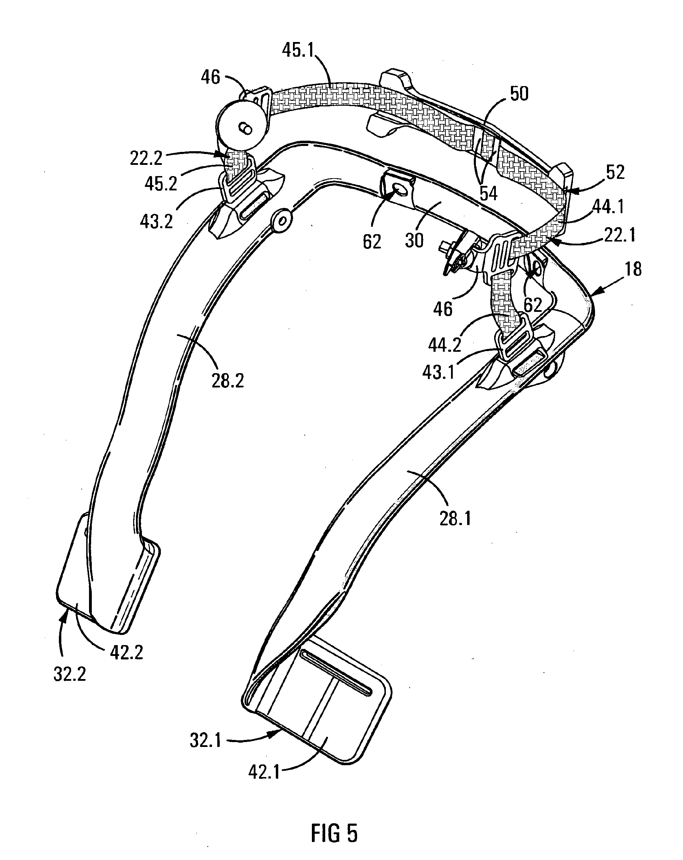

Figure 5 shows a schematic perspective view of the yoke and collar mounting formation of the head and neck support device of Figure 1;

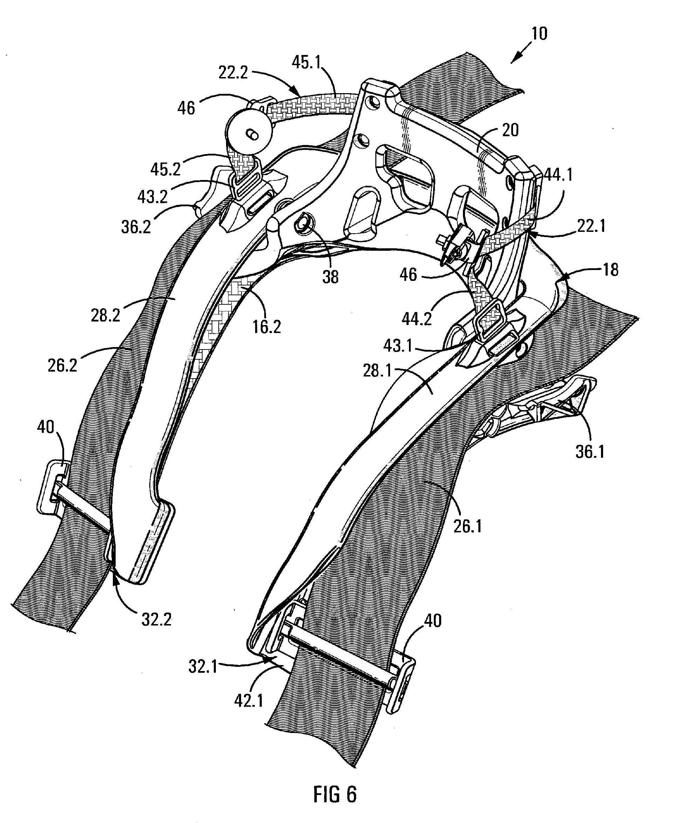

Figure 6 shows a schematic perspective view of the head and neck support device, illustrating the manner in which the shoulder belts of a shoulder harness are located thereon; and

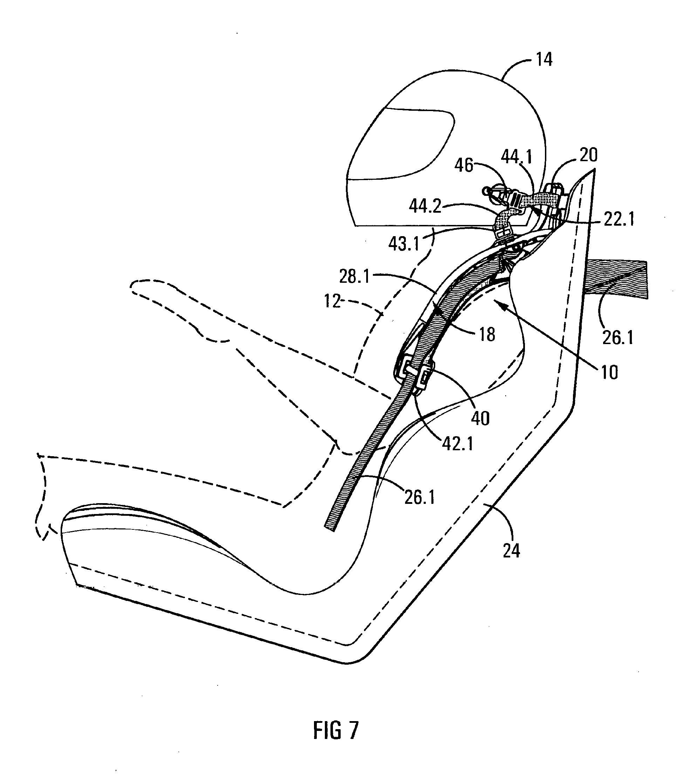

Figure 7 shows a schematic side view of the head and neck support device of Figure 1, illustrating its mode of use by an occupant of a high speed performance vehicle seated in a vehicle seat and wearing a shoulder harness.

### DESCRIPTION OF PREFERRED EMBODIMENTS

With reference to the drawings, a head and neck support device, in accordance with the invention, is designated generally by the reference numeral 10. The head and neck support device 10 is specifically adapted for use by a person 12 wearing a helmet 14. The device 10 comprises, broadly, a pair of flexible shoulder straps 16.1 and 16.2, a stiff carrier structure including a U-shaped yoke 18 and a high collar 20 which is hingedly connected to the yoke 18 and tethering means in the form of a pair of tethering systems 22.1 and 22.2.

In this example, the head and neck support device 10 is used by a person 12 who is an occupant of a high performance vehicle seated in a rigid seat 24. The person 12 in this instance, is strapped in the seat by means of a shoulder harness having two shoulder belts 26.1 and 26.2 which are mounted to a backwall of the cockpit of the vehicle and which extend through holes defined therefor in the rigid seat 24 over the shoulder and front torso of the person 12 where the shoulder belts are united on the chest of the person by a central buckle of the harness. The shoulder belts extend towards one another from upper regions to lower regions thereof, so as to define a V-shape.

The yoke 18 comprises a pair of front carrier portions 28.1 and 28.2 which are shaped and configured to extend over the shoulders and torso of the person 12, and an integral rear carrier portion 30 which extends behind the high collar 20 relative to the person. The front carrier portions 28.1 and 28.2 of the yoke 18 terminate at lower ends 32.1 and 32.2, respectively. The front carrier portions 28.1 and 28.2 include strap attachment formations 34.1 and 34.2 at their lower ends to which the shoulder straps 16.1 and 16.2, respectively, are attached.

The head and helmet combined of the person 12 have a horizontal level centre of gravity which is disposed at about eye level. The high collar 20 extends between a lower position at about the base of the person's neck and an upper position adjacent the horizontal level centre of gravity of the head and helmet combined of the person. The collar 20 is curved to conform to the shape of the head and helmet of the person 12.

The carrier structure includes a pair of shoulder belt locating formations 36.1 and 36.2 which are integrally formed with the collar 20 and which each extend laterally outwardly from a lower side region of the collar. Each belt locating formation 36 defines a channel formation in which a particular one of the shoulder belts 26.1 and 26.2 is located. The yoke 18, the collar 20 and the belt locating formations 36 formed integrally therewith, are preferably constructed of a lightweight, durable, stiff material such as carbon fibre composite or a high impact resistant plastic material. It will be appreciated that the yoke 18, although being stiff, has a degree of resilient flexibility.

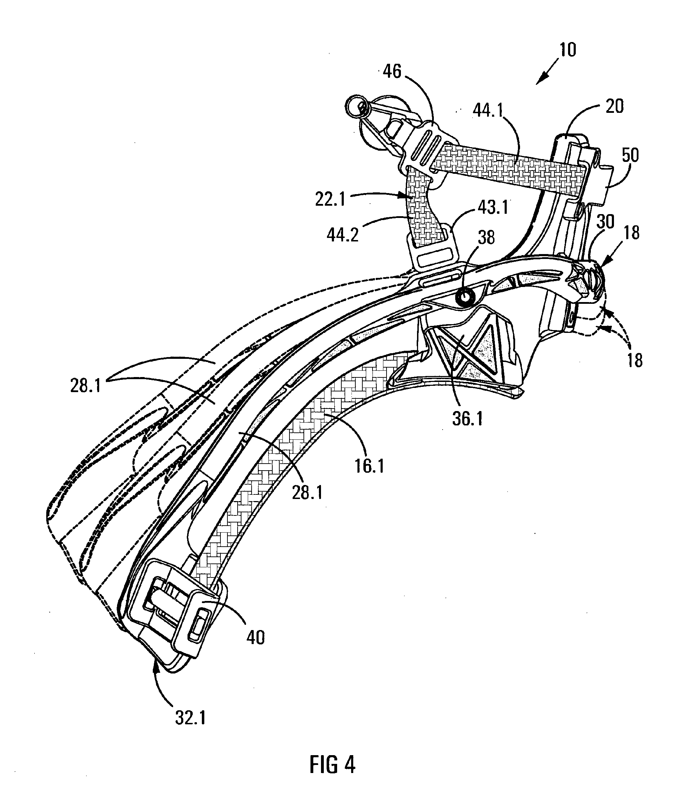

The yoke 18 is pivotally connected to the collar 20 by means of pivot pins 38 thereby permitting articulation of the yoke 18 relative to the collar 20 in a substantially vertical plane. With reference to Figure 4 of the drawings, the manner in which the yoke 18 is pivotally displaceable relative to the high collar, is illustrated. In use, articulation of the yoke 18 relative to the collar 20 permits the position of the yoke to be altered relative to the high collar, thereby to accommodate different reclining positions of the person 12 and also persons having different anatomical shapes.

The shoulder straps 16.1 and 16.2 are of webbing material and are each configured to be located on a different shoulder of the person and to extend downwardly along the front portion of the person. The shoulder straps are flexible so as to permit bending and twisting and as such, are thus configured to conform to the anatomical shape of the shoulder and front torso of the person 12. The shoulder straps are, however, not extendable along their lengths and as such, do not provide for any elongation. Upper ends of the shoulder straps 16.1 and 16.2 are fixedly secured to the belt locating formations 36.1 and 36.2, respectively. The straps 16.1 and 16.2 are spaced below the front carrier portions 28.1 and 28.2, respectively. The shoulder straps 16.1 and 16.2 each carry a buckle 40 for locating the shoulder belts 26.1 and 26.2 relative to the shoulder straps 16.1 and 16.2, respectively.

The front carrier portions 28.1 and 28.2 of the yoke 18 define channel-shaped belt locating formations 42.1 and 42.2 at their ends 32.1 and 32.2, respectively, within which the shoulder belts 26.1 and 26.2, respectively, are received. More specifically, the belt locating formations 42.1 and 42.2 define channel formations which face outwardly away from each other. The belt locating formations 42.1 and 42.2 thus frictionally engage inner sides of the shoulder belts received therein, thus pretensioning the shoulder belts in similar fashion to that provided by a taper-lock system.

The tethering systems 22.1 and 22.2 are attachable to the helmet 14 at left and right sides thereof, respectively. The tethering system 22.1 includes tether straps 44.1 and 44.2 which are fixedly connected to a catch 46 for releasable attachment to a post anchor attached to the left side of the helmet. Similarly, the tethering system 22.2 includes tether straps 45.1 and 45.2 which are connected to a catch 46 for releasable attachment to a post anchor attached to the right side of the helmet. The tether straps 44.1 and 45.1 are connected, in use, between the collar 20 and the helmet 14 so that the tether straps 44.1 and 45.1 provide a restraint between the collar 20 and the helmet 14 in a substantially horizontal direction at or slightly below the horizontal level centre of gravity of the head and helmet combined, of the person 12. The tether straps 44.2 and 45.2 are connected between mounting formations 43.1 and 43.2 on each of the front carrier portions 28.1 and 28.2, respectively, and the helmet 14 so that the tether straps 44.2 and 45.2 provide a restraint between the front carrier portions and the helmet in a substantially vertical direction. The tethers are connected in such a way as to allow side to side turning motion of the head of the person. The lengths of the tether straps allow the person to have forward and lateral field of view. The tether straps 44.1 and 45.1 form two parts of a single strap which extends behind the collar at an upper region thereof. The tether straps are attachable to the helmet at positions which conform to the design specifications prescribed by the Homologated Motorsport Authority Specification.

The device 10 includes a tether strap locating formation 50 which is fixedly secured to a rear side of the collar 20 and which defines a horizontally-extending channel 52 within which the single strap is received. More specifically, the strap locating formation 50 include central frictional gripping formations 54 defining an internal passage through which the single strap passes and which frictionally engages the strap thereby frictionally resisting displacement of the tether strap along the channel formation 52. By providing a horizontal single strap, increased movement of the person's head from side to side is permitted while at the same time restricting motion in a direction away from the collar. The frictional gripping formations 54 are operable to frictionally engage the single strap at relatively high accelerations of the strap, thereby preventing movement of the strap along the channel formation 52, while permitting relative movement of the strap along the channel formation 52, at relatively low accelerations of the strap.

The collar 20 defines a set of pairs of mounting holes 60 and the yoke 18 defines a pair of mounting holes 62. The collar is fixedly releasably mounted to the yoke by a pair of mounting pins 64 protruding through an aligned pair of collar mounting holes and pair of yoke mounting holes.

In use, the device 10 is securely held in place by the shoulder belts 26.1 and 26.2 of the shoulder harness when the person is securely strapped in the vehicle. The shoulder belts 26.1 and 26.2 are located between the shoulder straps and the front carrier portions of the yoke.

The tether straps limit loading applied to the head and neck region of the person by providing a physical connection between the helmet and the carrier structure. As such, forces acting on the helmet and head of the person are transferred via the tether straps to the carrier structure and the shoulder straps onto the shoulder and front torso region of the person which in this case serves as an anchor.

It will be appreciated that the exact configuration of the head and neck support device in accordance with the invention, may vary greatly while still incorporating the essential features of the invention as described and defined hereinabove. It will also be appreciated that the embodiments described above were chosen in order to best explain the principles of the invention and the invention is not intended to be limited to the details described above since various modifications and structural changes may be made without departing in any way from the spirit of the invention.

## Claims

1. A head and neck support device (10) for use by a person (12) wearing a helmet (14), the head and neck support device (10) including:
a pair of flexible shoulder straps (16.1,16.2) which are each configured to fit a torso and different shoulder of the person;
a stiff carrier structure including a high collar (20) which is locatable adjacent and behind the neck of the person; and
tethering means (22.1,22.2) extending between the carrier structure and the helmet (14) for providing a restraint between the carrier structure and the helmet (14)
**characterized in that**
the carrier structure includes a pair of front carrier portions (28.1,28.2) which are configured to extend over the shoulders and torso of the person (12) and which are spaced above the shoulder straps (16.1,16.2);
each of the pair of front carrier portions (28.1,28.2) of
the carrier structure has an upper attachement formation (36.1, 36.2) near an upper end of each front carrier portion and a lower attachment formation, (34.1,34.2) near a lower end of each front carrier portion for attaching the respective shoulder strap (16.1,16.2); and
the collar (20) is connected between the front carrier portions (28.1,28.2).

2. The head and neck support device (10) as claimed in claim 1, wherein the front carrier portions (28.1,28.2) of the carrier structure are hingedly mounted to the high collar (20) thereby permitting articulation of the front carrier portions (28.1,28.2) relative to the high collar (20).

3. The head and neck support device (10) as claimed in claim 1 or claim 2, wherein the carrier includes a U-shaped yoke (18) which includes said front carrier portions (28.1,28.2) and an integral rear carrier portion (30) which extends behind the high collar (20) relative to the person (12).

4. The head and neck support device (10) as claimed in any one of claims 1 to 3, wherein the high collar (20) extends between a lower position at about the base of the person's neck and an upper position adjacent a horizontal level centre of gravity of the head of the person (12) and helmet (14) combined, which is disposed at about eye level of the person (12).

5. The head and neck support device (10) as claimed in any one of claims 1 to 4, wherein the tethering means (22.1,22.2) includes a first tethering system (22.1) including a pair of tethering straps (44.1,44.2) attachable between the helmet (14) at one side thereof and the carrier structure and a second tethering system (22.2) including a pair of tethering straps (45.1,45.2) attachable between the helmet (14) at the other side thereof and the carrier structure.

6. The head and neck support device (10) as claimed in claim 5, wherein one of the tethering straps (45.1,44.1) of each tethering system (22.1,22.2) is attachable between the helmet (14) and the collar (20) so as to provide a restraint between the collar (20) and the helmet (14) in a substantially horizontal direction, while the other tethering strap (45.2,44.2) may be attachable between the helmet (14) and the collar (20) so as to provide a restraint between the front carrierportion (28.1,28.2) and the helmet (14) in a substantially vertical direction.

7. The head and neck support device (10) as claimed in claim 6, wherein the tethering straps (44.1,44.2, 45.1,45.2) of each tethering system (22.1,22.2) are attached to the helmet (14) at a common attachment point.

8. The head and neck support device (10) as claimed in any one of claims 1 to 7, wherein the head and neck support device (10) is adapted for use by an occupant of a vehicle wearing a shoulder harness having two shoulder belts (26.1,26.2), the shoulderbelts (26. 1, 26 .2) of the shoulder harness being received, in use, in a position between the shoulder straps (16.1,16.2) and the front carrier portions (28.1,28.2) of the head and neck support device (10), the front carrier portions (28.1,28.2) of the carrier structure including belt locating means (36.1,36.2, 42.1,42.2) for locating and holding the shoulder belts (26.1, 26.2) relative to the carrier structure in said position between the shoulder straps (16.1,16.2) and the front carrier portions (28.1,28.2).

9. The head and neck support device (10) as claimed in claim 8, wherein the locating means (36.1,36.2, 42.1,42.2) includes a pair of first locating formations (36.1,36.2) which are integral with the collar (20) and which define channels within which a different one of the shoulder belts (26.1,26.2) can be located; and a pair of second locating formations (42.1,42.2) which are defined near lower ends of the front carrier portions (28.1,28.2) in which a different one of the shoulder belts (26.1,26.2) can be located.

10. The head and neck support device (10) as claimed in claim 9, wherein the head and neck support device (10) is adapted for use with a shoulder harness of a type comprising two shoulder belts (26.1,26.2) and a restraint which is connected between the shoulder belts (26.1,26.2) causing the shoulder belts (26.1,26.2) to extend towards one another from an upper region thereof towards a lower region thereof in a substantially V-shaped configuration, the second locating formations (42.1,42.2) of the belt locating means (36.1,36.2, 42.1,42.2) each being in the form of a U-shaped locating formation in which a different one of the shoulder belts (26.1,26.2) can be received and defining an open end which faces outwards away from the other one of the second locating formations (42.1,42.2).

## Patentansprüche

1. Eine Kopf- und Nackenstützvorrichtung (10) zur Verwendung durch eine Person (12), welche einen Helm (14) trägt, wobei die Kopf-Und-Nackenstützvorrichtung (10) aufweist:
ein Paar flexible Schulterbänder (16.1, 16.2), von denen jedes dazu eingerichtet ist, an einen Torso und unterschiedliche Schultern einer Person anzuliegen;
eine steife Trägerstruktur, welche einen hohen Kragen (20) aufweist, welcher benachbart zu und hinter dem Nacken einer Person positionierbar ist; und
Anbindemittel (22.1, 22.2), welche sich zwischen der Trägerstruktur und dem Helm (14) erstrecken, um eine Beschränkung zwischen der Trägerstruktur und dem Helm (14) bereitzustellen;
**dadurch gekennzeichnet, dass**
die Trägerstruktur ein Paar vorderer Trägerabschnitte (28.1, 28.2) aufweist, welche dazu eingerichtet sind, sich über die Schultern und den Torso der Person (12) zu erstrecken und welche von den Schulterbändern (16.1, 16.2) im Abstand angeordnet sind;
wobei jeder von dem Paar der vorderen Trägerabschnitte (28.1, 28.2) der Trägerstruktur eine obere Befestigungsstruktur (36.1, 36.2) nahe einem oberen Ende jedes vorderen Trägerabschnitts und eine untere Befestigungsstruktur (34.1, 34.2) nahe einem unteren Ende jedes vorderen Trägerabschnitts zum Befestigen des jeweiligen Schulterbands (16.1,16.2) aufweist; und
der Kragen (20) zwischen den vorderen Trägerabschnitten (28.1, 28.2) verbunden ist.

2. Die Kopf- und Nackenstützvorrichtung (10) gemäß Anspruch 1, wobei die vorderen Trägerabschnitte (28.1, 28.2) der Trägerstruktur mit dem hohen Kragen (20) gelenkbefestigt sind, wodurch eine Beweglichkeit der vorderen Trägerabschnitte (28.1, 28.2) relativ zum hohen Kragen (20) ermöglicht ist.

3. Die Kopf- und Nackenstützvorrichtung (10) gemäß Anspruch 1 oder Anspruch 2, wobei der Träger ein U-förmiges Joch (18) aufweist, welches die vorderen Trägerabschnitte (28.1, 28.2) und einen integralen hinteren Trägerabschnitt (30) aufweist, welcher sich hinter dem hohen Kragen (20) relativ zur Person (20) erstreckt.

4. Die Kopf- und Nackenstützvorrichtung (10) gemäß irgendeinem der Ansprüche 1 bis 3, wobei der hohe Kragen (20) sich zwischen einer unteren Position, welche ungefähr an der Basis des Nackens einer Person liegt, und einer oberen, zu einem horizontalen Schwerpunkt des Kopfs der Person (12) und Helms (14), welche miteinander verbunden sind, benachbarten Position erstreckt, welche ungefähr auf Augenhöhe der Person (12) angeordnet ist

5. Die Kopf- und Nackenstützvorrichtung (10) gemäß irgendeinem der Ansprüche 1 bis 4, wobei die Anbindemittel (22.1, 22.2) ein erstes Anbindesystem (22.1), welches ein Paar Anbindegurte (44.1, 44.2) aufweist, welche zwischen dem Helm (14), an einer Seite davon, und der Trägerstruktur anbringbar sind, und ein zweites Anbindesystem (22.2) aufweisen, welches ein Paar Anbindegurte (45.1, 45.2) aufweist, welche zwischen dem Helm (14), an der anderen Seite davon, und der Trägerstruktur anbringbar sind.

6. Die Kopf- und Nackenstützvorrichtung (10) gemäß Anspruch 5, wobei einer der Anbindegurte (45.1, 44.1) jedes Anbindesystems (22.1, 22.2) zwischen dem Helm (14) und dem Kragen (20) anbringbar ist, um eine Beschränkung zwischen dem Kragen (20) und dem Helm (14) in einer im Wesentlichen horizontalen Richtung bereitzustellen, wobei der andere Anbindegurt (45.2,.44.2) zwischen dem Helm (14) und dem Kragen (20) anbringbar sein kann, um eine Beschränkung zwischen dem vorderen Trägerabschnitt (28.1, 28.2) und dem Helm (14) in einer im Wesentlichen vertikalen Richtung bereitzustellen.

7. Die Kopf- und Nackenstützvorrichtung (10) gemäß Anspruch 6, wobei die Anbindegurte (44.1, 44.2, 45.1, 45.2) eines jeden Anbindesystems (22.1, 22.2) an einem gemeinsamen Befestigungspunkt an dem Helm (14) anbringbar sind.

8. Die Kopf- und Nackenstützvorrichtung (10) gemäß irgendeinem der Ansprüche 1 bis 7, wobei die Kopf- und Nackenstützvorrichtung (10) zur Verwendung durch einen Insassen eines Fahrzeugs eingerichtet ist, welcher ein Schultergeschirr trägt, welches zwei Schultergurte (26.1, 26.2) aufweist, wobei die Schultergurte (26.1, 26.2) des Schultergeschirrs bei Verwendung in einer Position zwischen den Schulterbändern (16.1, 16.2) und den vorderen Trägerabschnitten (28.1, 28.2) der Kopf-und Nackenstützvorrichtung (10) aufgenommen sind, wobei die vorderen Trägerabschnitte (28.1, 28.2) der Trägerstruktur Gurtanordnungsmittel (36.1, 36.2, 42.1, 42.2) aufweisen zum Anordnen und Halten der Schultergurte (26.1,26.2) relativ zur Trägerstruktur in der Position zwischen den Schulterbändern (16.1, 16.2) und den vorderen Trägerabschnitten (28.1, 28.2).

9. Die Knopf- und Nackenstützvorrichtung (10) gemäß Anspruch 8, wobei die Gurtanordnungsmittel (36.1, 36.2, 42.1, 42.2) ein Paar erste Anordnungsstrukturen (36.1, 36.2), welche integral mit dem Kragen (20) ausgebildet sind und welche Kanäle definieren, innerhalb welcher ein unterschiedlicher der Schultergurte (26.1, 26.2) angeordnet werden kann; und ein Paar zweiter Anordnungsstrukturen (42.1, 42.2) aufweisen, welche nahe von unteren Enden der vorderen Trägerabschnitte (28.1, 28.2) definiert sind, in welchen ein unterschiedlicher der Schultergurte (26.1, 26.2) angeordnet werden kann.

10. Die Kopf- und Nackenstützvorrichtung (10) gemäß Anspruch 9, wobei die Kopf- und Nackenstützvorrichtung (10) zur Verwendung mit einem Schultergeschirr von dem Typ eingerichtet ist, welcher zwei Schultergurte (26.1, 26.2) und eine Beschränkung aufweist, welche zwischen den Schultergurten (26.1, 26.2) verbunden ist, was bewirkt, dass sich die Schultergurte (26.1, 26.2) von einem oberen Bereich davon hin zu einem unteren Bereich davon in einer im Wesentlichen V-förmigen Konfiguration aufeinander zu erstrecken, wobei eine jede von den zweiten Anordnungsstrukturen (42.1, 42.2) der Gurtanordnungsmittel (36.1, 36.2, 42.1, 42.2) in der Form einer U-förmigen Anordnungsstruktur vorliegt, in welcher ein unterschiedlicher der Schultergurte (26.1, 26.2) aufgenommen werden kann und welche ein offenes Ende definiert, welches von dem anderen der zweiten Anordnungsstrukturen (42.1, 42.2) nach außen hin weggewandt ist.

## Revendications

1. Dispositif de support de tête et de cou (10) destiné à être utilisé par une personne (12) portant un casque (14), le dispositif de support de tête et de cou (10) comprenant :
une paire de sangles d'épaule flexibles (16.1, 16.2) qui sont chacune configurées pour s'adapter à un torse et une épaule différente de la personne ;
une structure de support rigide comprenant un collier haut (20) qui peut être positionné de manière adjacente et derrière le cou de la personne ; et
des moyens d'attache (22.1, 22.2) s'étendant entre la structure de support et le casque (14) pour fournir une retenue entre la structure de support et le casque (14),
**caractérisé en ce que** :
la structure de support comprend une paire de parties de support avant (28.1, 28.2) qui sont configurées pour s'étendre sur les épaules et le torse de la personne (12) et qui sont espacées au-dessus des sangles d'épaule (16.1, 16.2) ;
chacune de la paire de parties de support avant (28.1, 28.2) de la structure de support a une formation de fixation supérieure (36.1, 36.2) à proximité d'une extrémité supérieure de chaque partie de support avant et une formation de fixation inférieure (34.1, 34.2) à proximité d'une extrémité inférieure de chaque partie de support avant pour fixer la sangle d'épaule (16.1, 16.2) respective ; et
le collier (20) est raccordé entre les parties de support avant (28.1, 28.2).

2. Dispositif de support de tête et de cou (10) selon la revendication 1, dans lequel les parties de support avant (28.1, 28.2) de la structure de support sont montées de manière articulée sur le collier haut (20) permettant ainsi l'articulation des parties de support avant (28.1, 28.2) par rapport au collier haut (20).

3. Dispositif de support de tête et de cou (10) selon la revendication 1 ou la revendication 2, dans lequel le support comprend une fourchette en forme de U (18) qui comprend lesdites parties de support avant (28.1, 28.2) et une partie de support arrière solidaire (30) qui s'étend derrière le collier haut (20) par rapport à la personne (12).

4. Dispositif de support de tête et de cou (10) selon l'une quelconque des revendications 1 à 3, dans lequel le collier haut (20) s'étend entre une position inférieure à peu près à la base du cou de la personne et une position supérieure adjacente à un centre de gravité de niveau horizontal de la tête de la personne (12) et du casque (14) combinés, qui est disposée à peu près au niveau de l'oeil de la personne (12).

5. Dispositif de support de tête et de cou (10) selon l'une quelconque des revendications 1 à 4, dans lequel les moyens d'attache (22.1, 22.2) comprennent un premier système d'attache (22.1) comprenant une paire de sangles d'attache (44.1, 44.2) pouvant être fixées entre le casque (14) au niveau de son côté et la structure de support et un second système d'attache (22.2) comprenant une paire de sangles d'attache (45.1, 45.2) pouvant être fixées entre le casque (14) au niveau de son autre côté et la structure de support.

6. Dispositif de support de tête et de cou (10) selon la revendication 5, dans lequel l'une des sangles d'attache (45.1, 44.1) de chaque système d'attache (22.1, 22.2) peut être fixée entre le casque (14) et le collier (20) afin de fournir une retenue entre le collier (20) et le casque (14) dans une direction sensiblement horizontale, alors que l'autre sangle d'attache (45.2, 44.2) peut être fixée entre le casque (14) et le collier (20) afin de fournir une retenue entre la partie de support avant (28.1, 28.2) et le casque (14) dans une direction sensiblement verticale.

7. Dispositif de support de tête et de cou (10) selon la revendication 6, dans lequel les sangles d'attache (44.1, 44.2, 45.1, 45.2) de chaque système d'attache (22.1, 22.2) sont fixées au casque (14) à un point de fixation commun.

8. Dispositif de support de tête et de cou (10) selon l'une quelconque des revendications 1 à 7, dans lequel le dispositif de support de tête et de cou (10) est adapté pour être utilisé par un occupant d'un véhicule portant un harnais ayant deux bretelles (26.1, 26.2), les bretelles (26.1, 26.2) du harnais étant reçues, à l'usage, dans une position entre les sangles d'épaule (16.1, 16.2) et les parties de support avant (28.1, 28.2) du dispositif de support de tête et de cou (10), les parties de support avant (28.1, 28.2) de la structure de support comprenant des moyens de positionnement de ceinture (36.1, 36.2, 42.1, 42.2) pour positionner et maintenir les sangles d'épaule (26.1, 26.2) par rapport à la structure de support dans ladite position entre les sangles d'épaule (16.1, 16.2) et les parties de support avant (28.1, 28.2).

9. Dispositif de support de tête et de cou (10) selon la revendication 8, dans lequel les moyens de positionnement (36.1, 36.2, 42.1, 42.2) comprennent une paire de premières formations de positionnement (36.1, 36.2) qui sont solidaires avec le collier (20) et qui définissent des canaux à l'intérieur desquels une bretelle différente des bretelles (26.1, 26.2) peut être positionnée ; et une paire de secondes formations de positionnement (42.1, 42.2) qui sont définies à proximité des extrémités inférieures des parties de support avant (28.1, 28.2) dans lesquelles une bretelle différente des bretelles (26.1, 26.2) peut être positionnée.

10. Dispositif de support de tête et de cou (10) selon la revendication 9, dans lequel le dispositif de support de tête et de cou (10) est adapté pour être utilisé avec un harnais d'un type comprenant deux bretelles (26.1, 26.2) et une retenue qui est raccordée entre les bretelles (26.1, 26.2) amenant les bretelles (26.1, 26.2) à s'étendre l'une vers l'autre à partir de leur région supérieure vers leur région inférieure dans une configuration sensiblement en forme de V, les secondes formations de positionnement (42.1, 42.2) des moyens de positionnement de ceinture (36.1, 36.2, 42.1, 42.2) se présentant chacune sous la forme d'une formation de positionnement en forme de U dans laquelle une bretelle différente des bretelles (26.1, 26.2) peut être reçue et définissant une extrémité ouverte qui est orientée vers l'extérieur à distance de l'autre des secondes formations de positionnement (42.1, 42.2).
